## Europäisches Patentamt
## European Patent Office
## Office européen des brevets

(19)

(11) Publication number: **0 017 410**
**A1**

(12) ## EUROPEAN PATENT APPLICATION

(21) Application number: **80300908.3**

(22) Date of filing: **24.03.80**

(51) Int. Cl.³: **F 28 F 9/02**

(30) Priority: **24.03.79 GB 7910428**

(43) Date of publication of application:
**15.10.80 Bulletin 80/21**

(84) Designated Contracting States:
**BE DE FR GB IT SE**

(71) Applicant: **BL CARS LIMITED**
**35-38 Portman Square**
**London W1H 0HQ(GB)**

(72) Inventor: **Banton, Anthony Philip**
**37, Hilltop**
**Llanelli Dyfed SA14 8DF(GB)**

(74) Representative: **Hunt, Anthony Edward**
**BL Limited Patent Department Cowley Body Plant**
**Cowley Oxford OX4 5NL(GB)**

(54) Heat exchanger and method of manufacturing the same.

(57) A heat exchanger has a plastics header tank shell (12) and a metal tube plate (14) which receives a plurality of tubes (13). The tank shell (12) is attached to the tube plate (14) by way of a plastics bead (17), which is moulded around the edge of the tube plate (14) prior to attachment of the shell (12) by means of ultrasonic welding. Different methods of attachment of the shell (12) to the bead (17) are possible, for example by an adhesive, and the edge of the tube plate (14) may be treated in a number of ways to increase the bond between the bead (17) and the tube plate (14), for example by means of an inwardly directed flange (16) around the tube plate edge.

FIG.2.

EP 0 017 410 A1

IMPROVEMENTS RELATING TO HEAT EXCHANGERS

This invention relates to heat exchangers, and more particularly to heat exchangers including a header tank defined by a header tank shell and an end plate of the radiator matrix. The end plates are commonly termed tube plates as they generally receive the ends of fluid carrying tubes included in the matrix. Such heat exchangers have commonly been used as motor vehicle radiators, but also find application in other fields, and can be used for example as evaporators and condensers.

Header tank shells have in the past been attached to the tube plates by a number of methods. Metal shells have commonly been soldered to the tube plate, while the more recently introduced plastics shells have been retained by mechanical clenching of the tube plate edge over a flange on the shell, a gasket interposed between the shell and the tube plate ensuring a seal between the two. In the prior arrangements there have frequently been problems ensuring economic heat exchanger manufacture and at the same time strong mechanical joints with adequate sealing.

The present invention provides a method of manufacturing a heat exchanger, which includes moulding a bead of plastics material on a tube plate, and attaching a header tank shell to the plastics bead.

The invention is particularly useful for attaching plastics header tank shells, but could be used in relation to metal shells.

2

Viewed from another aspect, the invention provides a heat exchanger having a header tank attached to a tube plate, in which a bead of plastics material is moulded onto the tube plate, and the header tank is affixed to the plastics bead.

Embodiments of the invention will now be described by way of example and with reference to the accompanying drawings, in which:-

Figure 1 is a cross-sectional plan view through a heat exchanger header tank shell in accordance with the invention;

Figure 2 shows part of the header tank shell and tube plate of the heat exchanger of Figure 1 in a cross-section taken on the line I-I;

Figure 3 is a similar view to Figure 2 showing an alternative arrangement in accordance with the invention;  and

Figure 4 is a similar view to Figures 2 and 3 but showing a further alternative arrangement in accordance with the invention.

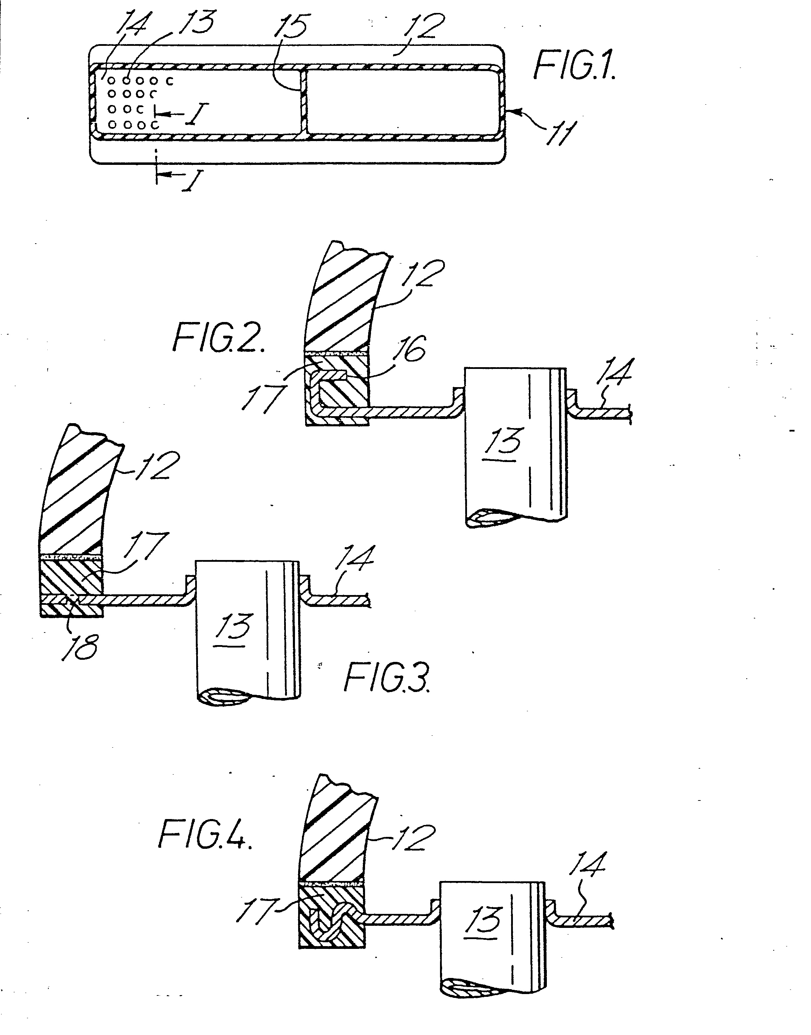

Figure 1 is a plan view of a multi-pass motor vehicle radiator 11 sectioned horizontally through its plastics header tank shell 12 to reveal a plurality of tubes 13, only some of which are shown, projecting through a tube plate 14.   Header tank shell 12 has an internal web 15 which extends the full height and width of the interior of the header tank to divide the tank into two compartments.   This strengthens the tank and tube plate assembly and also enables the multi-pass function of the radiator.   In

3

use, coolant from the motor vehicle's engine enters one of the two compartments, passes through the tubes communicating with that compartment until it reaches the header tank at the bottom of the radiator.

From there it passes into tubes communicating with the other compartment of the illustrated header tank, through which it passes before leaving the radiator.

The header tank shell 12 is affixed to the tube plate 14 along its rim and along the web 15 by the method according to the invention, as illustrated by Figures 2 and 3. In the embodiment of Figure 2, the metal tube plate 14 has a bent over inwardly directed edge 16. Around the edge 16 and across the tube plate where web 15 is to be affixed (not shown), is moulded a plastics bead 17. The tank shell 12 is attached to the plastics bead by ultrasonically welding the two plastics elements together, although it could alternatively be attached by other known jointing techniques such as hot plate welding or by adhesive. By this method of attachment a water tight seal with adequate mechanical strength may be achieved without the use of the gaskets etc of the prior art.

In Figure 2, the bent over edge 16 provides a key for the plastics bead moulded onto it. In the embodiment of Figure 3 a key is provided by holes 18 disposed around the edge of the tube plate, while further holes are disposed in a line across the tube plate to key that part of the bead used to provide a base for attachment of the web 15.

4

In the embodiment of Figure 4 the bond between the plastics bead 17 and the tube plate 14 is increased by pressing into the edge of the tube plate a plurality of folds extending parallel to the edge.

CLAIMS

1)  A method of manufacturing a heat exchanger, characterised
    by moulding a bead (17) of plastics material on a tube
    plate (14) and attaching a header tank shell (12) to the
    plastics bead.

2)  A method as claimed in claim 1, characterised by the step
    of treating the edge of the tube plate (14) to increase
    the bond between the plastics bead (17) and the tube plate.

3)  A method as claimed in claim 2, characterised in that said
    treatment comprises providing holes (18) in the edge of
    said tube plate (14) through which said plastics bead
    moulding (17) extends.

4)  A method as claimed in claim 2, characterised in that said
    treatment comprises bending said tube plate (14) along a
    line parallel to said edge.

5)  A method as claimed in claim 4, characterised in that said
    edge is folded until it is inwardly directed (16).

6)  A method as claimed in claim 4, characterised in that said
    edge is provided with a plurality of folds.

7)  A method as claimed in any preceding claim, characterised
    in that said shell (12) and said bead (17) are welded
    together.

8)    . A method as claimed in claim 7, characterised in that said shell (12) and said bead (17) are ultrasonically welded together.

9)    A method as claimed in any preceding claim, characterised in that said shell (12) and said bead (17) are joined by adhesive.

10)    A heat exchanger characterised in that it has been produced in accordance with the method of any preceding claim.

11)    A heat exchanger as claimed in claim 10, characterised in that said shell (12) is of plastics material.

1/1

FIG.1.

FIG.2.

FIG.3.

FIG.4.

European Patent
Office

**EUROPEAN SEARCH REPORT**

Application number

EP 80 30 0908

## DOCUMENTS CONSIDERED TO BE RELEVANT

| Category | Citation of document with indication, where appropriate, of relevant passages | Relevant to claim |
|---|---|---|
| X | FR - A - 1 039 911 (CHAUSSON)<br>* Page 4, left-hand column, paragraph 6; right-hand column, paragraphs 2,3,4,5; page 5, left-hand column, paragraph 6; figures 18,20-23,27 * | 1,2,4-11 |
| | -- | |
| | FR - A - 2 085 294 (CHAUSSON)<br>* Page 2, line 8 - page 3, line 30; page 4, line 24 - page 5, line 5 and lines 28-39; figures 4,4a,4b,6 and 6a * | 1,3,7-11 |
| | ---- | |

**CLASSIFICATION OF THE APPLICATION (Int. Cl. 3)**

F 28 F 9/02

**TECHNICAL FIELDS SEARCHED (Int.Cl. 3)**

F 28 F

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 11-06-1980 | JOHANSSON |

EPO Form 1503.1   06.78